# EUROPÄISCHE PATENTSCHRIFT

(11) **EP 1 659 668 B1**
(45) Veröffentlichungstag und Bekanntmachung des Hinweises auf die Patenterteilung: **17.08.2011**
(21) Anmeldenummer: 05024361.7
(22) Anmeldetag: 09.11.2005
(51) Int. Cl.: H02G 3/12, H02G 3/08

(54) **Installationsdose für elektrotechnische Zwecke sowie Anordnung zu deren Installation**
Installation box for electrotechnical use and installation arrangement
Boîtier d'installation pour usage électrotechnique et agencement pour son installation.

(30) Priorität: 22.11.2004 DE 202004018083 U; 11.03.2005 DE 202005004106 U
(43) Veröffentlichungstag der Anmeldung: 24.05.2006
(73) Patentinhaber: Kaiser GmbH & Co. KG, 58579 Schalksmühle (DE)
(72) Erfinder: Kaiser, Burkard, Dipl.-Betriebswirt, 58509 Lüdenscheid (DE)
(74) Vertreter: Köchling, Conrad-Joachim

(56) Entgegenhaltungen:
- DE-A1- 2 806 374
- DE-A1- 2 834 189
- DE-U1- 7 734 966
- GB-A- 2 345 125

## Beschreibung

Die Erfindung betrifft eine Anordnung zur Installation von Installationsdosen für elektrotechnische Zwecke, insbesondere Hohlwanddosen, in Durchbrüche von feuerhemmenden Wänden, insbesondere F- 90 Wänden, wobei die Installationsdose in den Durchbruch einsetzbar und in der Installationssolllage fixierbar ist, wie sie im Oberbegriff des Anspruches 1 angegeben ist.

Installationsdosen für elektrotechnische Zwecke, insbesondere auch Hohlwanddosen, sind im Stand der Technik bekannt. Beim Einbau solcher Installationsdosen in feuerhemmende Wände, die beispielsweise nach den Bestimmungen als F- 90 Wände ausgelegt sind, treten häufig Probleme auf, weil sowohl bei der Erstinstallation als auch insbesondere bei der Nachrüstung von Installationsdosen in solchen Wänden, die überwiegend als Hohlwände ausgebildet sind, der F- 90 Schutz nicht gewährleistet ist. Dies kann darauf beruhen, dass die Installationsdosen selbst nicht feuerhemmend nach den Bestimmungen für F- 90 Wände ausgerüstet sind und auch daran, dass die Installationsdosen selbst und auch der Wandungsdurchbruch, in den die Dosen eingesetzt werden, nicht oder nur schwer abgedichtet werden können beziehungsweise kann, so dass sowohl die Übertragung von Brandgasen als auch ein Feuerdurchbruch vor Ablauf der bestimmungsgemäßen Zeit, insbesondere 90 Minuten, möglich ist.

Aus der GB- A 2 345 125 ist eine gattungsgemäße Anordnung bekannt. Hierbei ist die Anordnung und vor allem die Fixierung des Formkörpers hinter der Wand schwierig, weil dieser Bereich bei der Montage nicht zugänglich ist.

Ausgehend von diesem Stand der Technik liegt der Erfindung die Aufgabe zugrunde, eine Anordnung zur Installation von Installationsdosen zu schaffen, durch die ein Einbau in feuerhemmende Wände, insbesondere F- 90 Wände, vorzugsweise Hohlwände ermöglicht ist, wobei die Brandschutzanforderungen nach Normen, Richtlinien und/oder Brandschutzbestimmungen, insbesondere nach der F- 90 Norm, gewährleistet sind und die sichere Montage erleichtert ist.

Zur Lösung dieser Aufgabe wird vorgeschlagen, dass ein Halteelement ausgebildet ist, welches durch den Wandungsdurchbruch montierbar ist und mit einem Endbereich an der Lochlaibung oder in deren Bereich fixiert ist, wobei das Halteelement im jenseits des Wandungsdurchbruches liegenden Bereich eine größere Querabmessung aufweist, als der Querabmessung oder dem Durchmesser des Wandungsdurchbruches entspricht, und dass in das Halteelement der Formkörper aus elastisch verformbarem Isoliermaterial eingesetzt und von diesem gehalten ist, wobei auch der Formkörper eine größere Querabmessung oder einen größeren Durchmesser aufweist, als der Wandungsdurchbruch, wobei zudem der Formkörper sich rückwärtig der Wandung an dieser abstützt und einen einseitig offenen Hohlraum zur Aufnahme einer durch den Wandungsdurchbruch zugeführten Installationsdose aufweist.

Gemäß dieser Ausbildung ist ein Halteelement vorgesehen, welches durch den Wandungsdurchbruch gesteckt werden kann und mit einem Endbereich an der Lochlaibung oder in deren Bereich fixiert ist. Das Halteelement ist vorzugsweise derart verformbar, dass es trotz seiner größeren Querabmessung als der Abmessung des Wandungsdurchbruches entspricht, zusammendrückbar und durch den Wandungsdurchbruch zuführbar ist, wobei es beispielsweise aufgrund der Eigenelastizität mit seinem Endbereich im Bereich der Lochlaibung aufspreizt und klemmend in der Lochlaibung gehalten ist. In dieses Halteelement kann dann der Formkörper, der vorzugsweise ebenfalls aus elastisch verformbarem Isoliermaterial besteht, durch den Wandungsdurchbruch hindurch montiert und eingesetzt werden, wobei der Formkörper von dem Halteelement gehalten und gestützt ist. Hierbei ist der Formkörper beziehungsweise dessen Hohlraum vorzugsweise so bemessen, dass der Formkörper sich rückwärtig der Wandung an dieser abstützt und der Hohlraum des Formkörpers etwa bündig zur Lochlaibung des Wandungsdurchbruches ausgerichtet ist. Durch den Wandungsdurchbruch kann wiederum eine Installationsdose zugeführt werden, die dann von dem Formkörper umschlossen ist.

Bevorzugt ist dazu vorgesehen, dass der Formkörper aus elastischem Isoliermaterial besteht, das nicht oder schwer entflammbar, feuerhemmend, unter Flammwirkung oder hoher Temperatureinwirkung aufquellend, kühlend, volumenvergrößernd und/oder aufblähbar ist.

In an sich bekannter Weise ist vorgesehen, dass die Installationsdose Laschenlager und mündungsseitig Anschlagteile oder einen Anschlagrand aufweist, wobei die Installationsdose mit den Anschlagteilen oder dem Anschlagrand sich an der Frontseite der Wandung abstützt und mittels der rückseitig der Wandung befindlichen, an diese anziehbaren Laschenlager in der Montagesolllage fixiert ist.

Solche von der Vorderseite der Installationsdose her betätigbare, insbesondere anziehbare Laschenlager sind bei Hohlwanddosen üblich und bekannt.

Um eine gute Befestigung zwischen der Installationsdose und dem Formkörper zu erreichen kann vorgesehen sein, dass die Installationsdose im Hohlraum des Formkörpers klebend, formschlüssig, reibschlüssig oder rastend befestigt ist.

Auch kann vorgesehen sein, dass der Formkörper, rückseitig an die Wandung angeklebt ist.

Hierdurch ist der Formkörper, insbesondere wenn er durch den Wandungsdurchbruch gesteckt ist, zumindest vorläufig oder auch endgültig an der Rückseite der Wandung fixierbar, so dass er unverlierbar gehalten ist.

Bei allen Ausführungsformen kann auch eine Blindinstallation erfolgen, so dass beispielsweise der Formkörper zwar installiert wird, dessen frontseitige Mündung aber durch eine Abdeckung abgedeckt wird, die nur dann entfernt wird, wenn eine Installationsdose in den Hohlraum des Formkörpers eingesetzt werden soll.

Des Weiteren kann bevorzugt vorgesehen sein, dass der Formkörper, insbesondere bodenseitig, mindestens einen Durchsteckbereich für Kabel oder dergleichen Anschlussmittel aufweist, der aufgrund der Elastizität des Formkörpers selbstschließend ist oder bei dem sich das Material des Formkörpers selbstdichtend an den Mantel von durchgesteckten Kabeln oder dergleichen Anschlussmittel anlegt.

Vorzugsweise besteht der Formkörper aus solchem Material, welches mit einem Werkzeug oder unmittelbar mit einem Kabel durchstoßbar ist, wobei die Elastizität des Materials ausreichend sein soll, um bei dem Durchstecken eines Kabels oder dergleichen eine selbstdichtende Anlage des Formkörpers an den Kabelmantel zu gewährleisten. Sofern der Formkörper entsprechende Durchbrüche aufweist, durch die ein Kabel oder dergleichen durchgeschoben werden kann, so sind diese selbstschließend ausgebildet, dass heißt, das Material des Formkörpers schließt diese Durchbrüche aufgrund seiner Eigenelastizität und gibt lediglich einen Spalt beim Einschieben eines Kabels oder dergleichen frei, der wiederum selbstschließend durch das Material des Formkörpers gedichtet wird.

Zur Installation kann der Installateur zunächst das Kabel durch beispielsweise den Boden des Formkörpers durchstecken und anschließend den Formkörper in den Wandungsdurchbruch einbringen oder durch den Wandungsdurchbruch stecken und von hinten an der entsprechenden Wandung fixieren. Diese Anschlusskabel oder dergleichen können dann in die entsprechende Installationsdose eingeführt werden, bevor die Installationsdose schließlich in den Hohlraum des Formkörpers eingefügt wird. Zur Befestigung des Halteelementes kann vorgesehen sein, dass das Halteelement in den Wandungsdurchbruch eingeclipst, eingerastet, eingeklebt und/oder eingeschraubt ist.

Zudem kann vorgesehen sein, dass das Halteelement als zweiarmiger oder mehrarmiger federnder Bügel ausgebildet ist.

Bevorzugt ist dabei vorgesehen, dass der federnde Bügel etwa U- förmig ausgebildet ist und an seinen Schenkelenden nach Art eines Rastprofils geformt ist, welches in der Montagesolllage in der Lochlaibung sitzt und den Rand der Ausnehmung der Platte vorderseitig und rückseitig übergreift.

Auch kann vorgesehen sein, dass der Formkörper eine mit dem Halteelement fest verbundene Einheit bildet.

Trotz dieser Anordnung ist eine elastische Verformung sowohl des Halteelementes als auch des Formkörpers möglich, um diese Elemente durch den Wandungsdurchbruch durchstecken zu können und ein Aufspreizen hinter dem Wandungsdurchbruch zu ermöglichen.

Eine vorteilhafte Weiterbildung wird darin gesehen, dass der Formkörper stirnseitig Halteteile aufweist, die in Montagesolllage an der Lochlaibung und frontseitig der Wandung anliegen.

Bei dieser Anordnung weist der Formkörper stabile Halteteile auf, die nicht aus dem Material des Formkörpers, sondern aus anderem Material bestehen können und eine sichere Halterung und Fixierung des Formteiles in der Lochlaibung oder im Bereich der Lochlaibung des Wandungsdurchbruches ermöglichen.

Dabei kann vorgesehen sein, dass die Halteteile als L-förmige Formstücke ausgebildet sind, deren einer Schenkel mit dem Formteil verbunden ist und frontseitig aus diesem vorragt und deren anderer Schenkel in Montagesolllage frontseitig an der Wandung anliegt.

Zur Verbindung der Halteteile mit dem Formteil kann vorgesehen sein, dass die Halteteile am Formteil eingeclipst, verrastet, eingeformt, eingeklebt und/oder angeschraubt sind.

Ausführungsbeispiele der Erfindung sind in der Zeichnung dargestellt und im Folgenden näher beschrieben.

Es zeigt:
- Figur 21A - 21E: eine Ausführungsform im Schnitt gesehen;
- Figur 22 und 23: Varianten von Einzelheiten der Anordnung, ebenfalls im Schnitt gesehen;

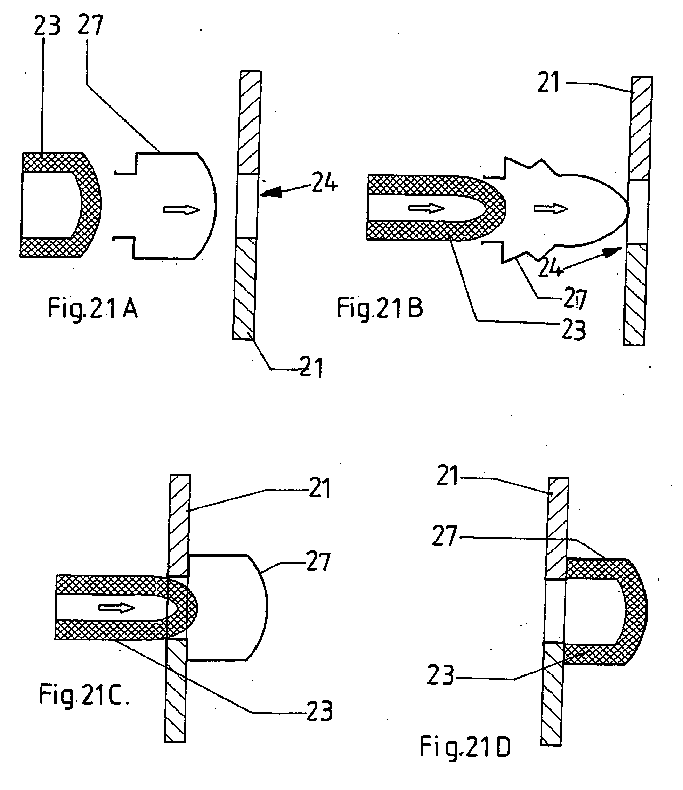

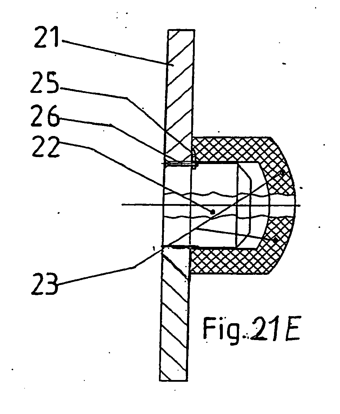

In den Figuren 21 bis 23 sind Anordnungen zur Installation von Installationsdosen 22 für elektrotechnische Zwecke, insbesondere Hohlwanddosen, in Durchbrüchen 24 von feuerhemmenden Wänden 21 gezeigt, wobei die Wände aus einlagigem oder mehrlagigem Material bestehen können. Um solche Installationsdosen 22 installieren und fixieren zu können und gleichzeitig gegen Feuereinwirkung zu schützen sowie ein Durchtreten oder Übertragen von Brandgasen oder Feuer durch den Wandungsdurchbruch im Bereich der Installationsdose zu verhindern, sind entsprechende Installationen vorgesehen.

Bei der Ausführungsform gemäß Figur 21A bis Figur 21E ist ein Halteelement 27 vorgesehen, welches elastisch verformbar ist und durch den Wandungsdurchbruch 24 montiert werden kann. Die Montage ist anhand der Figurenabfolge 21A, 21B und 21C verdeutlicht. In der Endlage sitzt das Halteelement 27, wie in Figur 21C und 21D gezeigt, mit einem Endbereich an der Lochlaibung 24, wobei das Halteelement im jenseits des Wandungsdurchbruches 24 liegenden Bereich eine größere Querabmessung aufweist als der Wandungsdurchbruch 24. In das Halteelement 27 ist ein Formkörper 23 aus elastisch verformbarem Isoliermaterial eingesetzt und von diesem gehalten. Auch der Formkörper 23 weist eine größere Querabmessung auf als der Wandungsdurchbruch 24. Die Montage des Formkörpers 23 ist anhand der Abfolge der Figuren 21A bis 21D ersichtlich. In der Endlage stützt sich der Formkörper 23 rückwärtig der Wandung 21 neben dem Wandungsdurchbruch 24 ab, wobei der Formkörper 23 wiederum einen einseitig zum Wandungsdurchbruch 24 offenen Hohlraum zur Aufnahme einer durch den Wandungsdurchbruch 24 zugeführten Installationsdose 22 aufweist.

Im Ausführungsbeispiel ist das Halteelement 27 als federnder Bügel ausgebildet, der etwa U-förmig ausgebildet ist und an seinen Schenkelenden nach Art eines Rastprofils eingezogen ist, welches in der Montagesolllage in der Lochlaibung des Wandungsdurchbruches 24 sitzt und den Rand des Wandungsdurchbruches 24 vorderseitig und rückseitig übergreift, so dass ein formschlüssiger Sitz erreicht ist.

Alternativ kann der Formkörper 23 auch mit dem Haltelement 27 eine fest verbundene Einheit bilden.

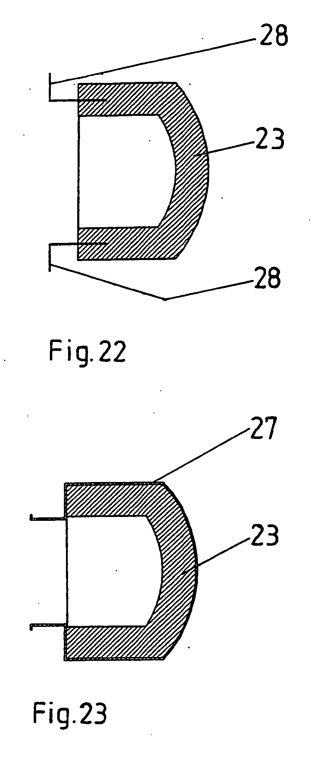

Wie in der Figur 22 gezeigt, kann der Formkörper 23 auch vorzugsweise stirnseitig Halteteile 28 aufweisen, die in der Montagesolllage an der Lochlaibung des Wandungsdurchbruches 4 und frontseitig der Wandung 21 anliegen. Hierbei sind die Halteteile 28 als L-förmige Formstücke ausgebildet, deren einer Schenkel mit dem Formteil 23 verbunden ist und frontseitig von diesem vorragt, während der andere Schenkel in der Montagesolllage frontseitig an der Wandung 21 anliegt. Die Halteteile 28 können am Formteil 23 in beliebiger Weise befestigt sein. In der Figur 23 ist eine Variante gezeigt, bei der das Formteil 23 fest mit dem Halteelement 27 verbunden ist.

## Patentansprüche

1. Anordnung zur Installation von Installationsdosen (22) für elektrotechnische Zwecke in Durchbrüche (24) von feuerhemmenden Wänden (21), wobei die Installationsdose (22) in den Durchbruch (24) einsetzbar und in der Installationssolllage fixierbar ist, wobei ein Formkörper (23) aus elastisch verformbarem Isoliermaterial vorgesehen ist, der durch den Wandungsdurchbruch (24) eingesetzt ist und sich rückseitig an der den Durchbruch (24) aufweisenden Wand (21) abstützt, und der Formkörper (23) einen einseitig offenen Hohlraum aufweist, in den eine Installationsdose (22) eingesetzt oder einsetzbar ist, **dadurch gekennzeichnet, dass** ein Halteelement (27) ausgebildet ist, welches durch den Wandungsdurchbruch (24) montierbar ist und mit einem Endbereich an der Lochlaibung oder in deren Bereich fixiert ist, wobei das Halteelement (27) im jenseits des Wandungsdurchbruches (24) liegenden Bereich eine größere Querabmessung aufweist, als der Querabmessung oder dem Durchmesser des Wandungsdurchbruches (24) entspricht, und dass in das Halteelement (27) der Formkörper (23) aus elastisch verformbarem Isoliermaterial eingesetzt und von diesem gehalten ist, wobei auch der Formkörper (23) eine größere Querabmessung oder einen größeren Durchmesser aufweist, als der Wandungsdurchbruch (24).

2. Anordnung nach Anspruch 1, **dadurch gekennzeichnet, dass** der Formkörper (23) aus elastischem Isoliermaterial besteht, das nicht oder schwer entflammbar, feuerhemmend, unter Flammwirkung oder hoher Temperatureinwirkung aufquellend, kühlend, volumenvergrößernd und/oder aufblähbar ist.

3. Anordnung nach einem der Ansprüche 1 oder 2, **dadurch gekennzeichnet, dass** die Installationsdose (22) Laschenlager (25) und mündungsseitig Anschlagteile oder einen Anschlagrand aufweist, wobei die Installationsdose (22) mit den Anschlagteilen oder dem Anschlagrand sich an der Frontseite der Wandung (21) abstützt und mittels der rückseitig der Wandung (21) befindlichen, an diese anziehbaren Laschenlager (25) in der Montagesolllage fixiert ist.

4. Anordnung nach einem der Ansprüche 1 bis 3, **dadurch gekennzeichnet, dass** die Installationsdose (22) im Hohlraum des Formkörpers (23) klebend, formschlüssig, reibschlüssig oder rastend befestigt ist.

5. Anordnung nach einem der Ansprüche 1 bis 4, **dadurch gekennzeichnet, dass** der Formkörper (23) rückseitig an die Wandung (21) angeklebt ist.

6. Anordnung nach einem der Ansprüche 1 bis 5, **dadurch gekennzeichnet, dass** der Formkörper (23) mindestens einen Durchsteckbereich für Kabel oder dergleichen Anschlussmittel aufweist, der aufgrund der Elastizität des Formkörpers (23) selbstschließend ist oder bei dem sich das Material des Formkörpers (23) selbstdichtend an den Mantel von durchgesteckten Kabeln oder dergleichen Anschlussmittel anlegt.

7. Anordnung nach Anspruch 1, **dadurch gekennzeichnet, dass** das Halteelement (27) in den Wandungsdurchbruch (24) eingeclipst, eingerastet, eingeklebt und/oder eingeschraubt ist.

8. Anordnung nach einem der Ansprüche 1 oder 7, **dadurch gekennzeichnet, dass** das Halteelement (27) als zweiarmiger oder mehrarmiger federnder Bügel ausgebildet ist.

9. Anordnung nach Anspruch 8, **dadurch gekennzeichnet, dass** die Arme des federnden Bügels etwa U- förmig ausgebildet ist und an ihren Enden nach Art eines Rastprofils geformt ist, welches in der Montagesolllage in der Lochlaibung sitzt und den Rand der Ausnehmung (24) der Platte (21) vorderseitig und rückseitig übergreift.

10. Anordnung nach einem der Ansprüche 1 oder 7 bis 9, **dadurch gekennzeichnet, dass** der Formkörper (23) eine mit dem Halteelement (27) fest verbundene Einheit bildet.

11. Anordnung nach einem der Ansprüche 1 bis 10, **dadurch gekennzeichnet, dass** der Formkörper (23) stirnseitig Halteteile (28) aufweist, die in Montagesolllage an der Lochlaibung und frontseitig der Wandung (21) anliegen.

12. Anordnung nach Anspruch 11, **dadurch gekennzeichnet, dass** die Halteteile (28) als L-förmige Formstücke ausgebildet sind, deren einer Schenkel mit dem Formteil (23) verbunden ist und frontseitig aus diesem vorragt und deren anderer Schenkel in Montagesolllage frontseitig an der Wandung (21) anliegt.

13. Anordnung nach Anspruch 12, **dadurch gekennzeichnet, dass** die Halteteile (28) am Formteil (23) eingeclipst, verrastet, eingeformt, eingeklebt und/oder angeschraubt sind.

## Claims

1. An arrangement for the installation of installation boxes (22) for electrotechnical purposes in apertures (24) in fire-retardant walls (21), wherein the installation box (22) is capable of being inserted in the aperture (24) and of being fixed in the pre-set installation position, wherein a moulded body (23) of resiliently deformable insulating material is provided which is inserted through the wall aperture (24) and is supported at the rear on the wall (21) provided with the aperture (24), and the moulded body (23) has a hollow space which is open on one side and into which an installation box (22) is inserted or is capable of being inserted, **characterized in that** a holding element (27) is formed which is capable of being mounted through the wall aperture (24) and is fixed with an end region on the inner surface of the aperture or in the region thereof, wherein the holding element (27) has a greater transverse dimension in the region situated on the far side of the wall aperture (24) than corresponds to the transverse dimension or the diameter of the wall aperture (24), and the moulded body (23) of resiliently deformable insulating material is inserted into the holding element (27) and is held by it, wherein the moulded body (23) also has a greater transverse dimension or a greater diameter than the wall aperture (24).

2. An arrangement according to claim 1, **characterized in that** the moulded body (23) consists of resilient insulating material which is not flammable or is practically non-flammable, is fire-retardant and under the action of flames or high temperature swells, cools, increases in volume and/or is inflatable.

3. An arrangement according to one of claims 1 or 2, **characterized in that** the installation box (22) has fastening plate mountings (25) and - on the opening side - stop parts or a stop edge, wherein the installation box (22) is supported with the stop parts or the stop edge on the front side of the wall (21) and is fixed in the pre-set mounting position by means of fastening plate mountings (25) present on the rear side of the wall (21) and capable of being drawn onto the latter.

4. An arrangement according to any one of claims 1 to 3, **characterized in that** the installation box (22) is fastened in the hollow space of the moulded body (23) by adhesion, positive locking, friction locking or catching.

5. An arrangement according to any one of claims 1 to 4, **characterized in that** the moulded body (23) is secured by adhesion to the wall (21) on the rear side.

6. An arrangement according to any one of claims 1 to 5, **characterized in that** the moulded body (23) has at least one passage area for cables or similar connecting means, which on account of the elasticity of the moulded body (23) is self-closing or in which the material of the moulded body (23) rests in a self-sealing manner against the casing of cables or similar connecting means which are passed though.

7. An arrangement according to claim 1, **characterized in that** the holding element (27) is clipped, caught, secured by adhesion and/or screwed into the wall aperture (24).

8. An arrangement according to one of claims 1 or 7, **characterized in that** the holding element (27) is designed in the form of a two-armed or multiple-armed springing yoke.

9. An arrangement according to claim 8, **characterized in that** the arms of the springing yoke [are] made substantially U-shaped and [are] shaped at the ends thereof in the manner of a catch profile which in the pre-set mounting position is situated in the inner surface of the aperture and engages over the edge of the recess (24) in the plate (21) on the front and the rear sides.

10. An arrangement according to one of claims 1 or 7 to 9, **characterized in that** the moulded body (23) forms a unit connected to the holding element (27) in a fixed manner.

11. An arrangement according to any one of claims 1 to 10, **characterized in that** the moulded body (23) has holding parts (28) on the end face which in the pre-set mounting position rest against the inner surface of the aperture and on the front side against the wall (21).

12. An arrangement according to claim 11, **characterized in that** the holding parts (28) are designed in the form of L-shaped moulded pieces, one limb of which is connected to the moulded part (23) and projects therefrom on the front side and the other limb of which rests on the front side against the wall (21) in the pre-set mounting position.

13. An arrangement according to claim 12, **characterized in that** the holding parts (28) are clipped, caught, moulded in, secured by adhesion and/or screwed on the moulded part (23).

## Revendications

1. Agencement pour l'installation de boîtiers d'installation (22) pour usages électrotechniques dans des ouvertures (24) de murs coupe-feu (21), le boîtier d'installation (22) pouvant être introduit dans l'ouverture (24) et fixé dans la position d'installation nominale, un corps moulé (23) en matériau isolant déformable élastiquement étant prévu, qui est introduit à travers l'ouverture de paroi (24) et s'appuie du côté arrière sur le mur (21) présentant l'ouverture (24), et le corps moulé (23) présentant une cavité ouverte d'un côté, dans laquelle un boîtier d'installation (22) est introduit ou peut être introduit, **caractérisé en ce qu'**un élément de maintien (27) est formé, lequel peut être monté à travers l'ouverture de paroi (24) et fixé par une zone d'extrémité à la paroi du trou ou dans la région de celle-ci, l'élément de maintien (27) présentant dans la région située de l'autre côté de l'ouverture de paroi (24) une plus grande dimension transversale que la dimension transversale ou le diamètre de l'ouverture de paroi (24), et que le corps moulé (23) en matériau isolant déformable élastiquement est introduit dans l'élément de maintien (27) et maintenu par celui-ci, le corps moulé (23) présentant aussi une plus grande dimension transversale ou un plus grand diamètre que l'ouverture de paroi (24).

2. Agencement selon la revendication 1, **caractérisé en ce que** le corps moulé (23) est composé d'un matériau isolant élastique qui n'est pas ou est difficilement inflammable, est ignifuge, gonfle, refroidit, augmente de volume et/ou boursoufle sous l'action des flammes ou l'influence d'une température élevée.

3. Agencement selon une des revendications 1 ou 2, **caractérisé en ce que** le boîtier d'installation (22) présente des éléments de fixation (25) et côté embouchure des pièces de butée ou un bord de butée, le boîtier d'installation (22) s'appuyant par les pièces de butée ou le bord de butée sur le côté avant de la paroi (21) et étant fixé dans la position de montage nominale au moyen des éléments de fixation (25) situés du côté arrière de la paroi (21), serrables sur celle-ci.

4. Agencement selon une des revendications 1 à 3, **caractérisé en ce que** le boîtier d'installation (22) est fixé dans la cavité du corps moulé (23) par collage, complémentarité de formes, friction ou encliquetage.

5. Agencement selon une des revendications 1 à 4, **caractérisé en ce que** le corps moulé (23) est collé du côté arrière à la paroi (21).

6. Agencement selon une des revendications 1 à 5, **caractérisé en ce que** le corps moulé (23) présente au moins une zone de passage pour des câbles ou moyens de raccordement analogues, laquelle est autoserrante en raison de l'élasticité du corps moulé (23) ou dans laquelle le matériau du corps moulé (23) s'applique de manière étanche sur la gaine de câbles ou moyens de raccordement analogues passés à travers.

7. Agencement selon la revendication 1, **caractérisé en ce que** l'élément de maintien (27) est clipsé, encliqueté, collé et/ou vissé dans l'ouverture de paroi (24).

8. Agencement selon une des revendications 1 ou 7, **caractérisé en ce que** l'élément de maintien (27) est réalisé sous la forme d'une bride élastique à deux bras ou à plusieurs bras.

9. Agencement selon la revendication 8, **caractérisé en ce que** les bras de la bride élastique sont approximativement en forme de U et formés à leurs extrémités à la manière d'un profil d'encliquetage qui, dans la position de montage nominale, est logée dans la paroi du trou et mord du côté avant et du côté arrière sur le bord de l'évidement (24) de la paroi (21).

10. Agencement selon une des revendications 1 ou 7 à 9, **caractérisé en ce que** le corps moulé (23) forme une unité solidaire de l'élément de maintien (27).

11. Agencement selon une des revendications 1 à 10, **caractérisé en ce que** le corps moulé (23) présente du côté frontal des pièces de maintien (28) qui, dans la position de montage nominale, s'appliquent sur la paroi du trou et sur le côté avant de la paroi (21).

12. Agencement selon la revendication 11, **caractérisé en ce que** les pièces de maintien (28) sont réalisées sous la forme de pièces moulées en forme de L dont une branche est reliée à la pièce moulée (23) et dépasse de celle-ci frontalement et dont l'autre branche s'applique, dans la position de montage nominale, sur le côté avant de la paroi (21).

13. Agencement selon la revendication 12, **caractérisé en ce que** les pièces de maintien (28) sont clipsées, encliquetées, moulées, collées et/ou vissées sur la pièce moulée (23).
